# EUROPÄISCHE PATENTSCHRIFT

(11) **EP 2 785 771 B1**
(45) Veröffentlichungstag und Bekanntmachung des Hinweises auf die Patenterteilung: **18.04.2018**
(21) Anmeldenummer: 12790923.2
(22) Anmeldetag: 27.11.2012
(51) Int. Cl.: C08L 69/00, C08K 5/103, C08K 3/04, B82Y 30/00, C08J 3/22, C08J 5/00, C08J 5/18, C08J 7/04, C08K 5/00, C09D 183/04

(54) **MEHRSCHICHTKÖRPER AUS POLYCARBONAT MIT TIEFENGLANZEFFEKT**
MULTI-LAYER POLYCARBONATE BODY WITH DEEP GLOSS EFFECT
CORPS MULTICOUCHE EN POLYCARBONATE AYANT UN EFFET DE BRILLANCE PROFONDE

(30) Priorität: 30.11.2011 EP 11191312
(43) Veröffentlichungstag der Anmeldung: 08.10.2014
(73) Patentinhaber: Covestro Deutschland AG, 51373 Leverkusen (DE)
(72) Erfinder: MEYER, Alexander, 40489 Düsseldorf (DE); CAPELLEN, Peter, 47803 Krefeld (DE); REICHENAUER, Jörg, 47802 Krefeld (DE); RUDOLF, Reiner, 40764 Langenfeld (DE); SEIDEL, Andreas, 41542 Dormagen (DE); THIEM, Hans-Jürgen, 41539 Dormagen (DE)
(74) Vertreter: Levpat
(86) Internationale Anmeldenummer: PCT/EP2012/073713
(87) Internationale Veröffentlichungsnummer: WO 2013/079478

(56) Entgegenhaltungen:
- EP-A1- 1 865 027
- EP-A1- 2 360 206
- WO-A1-2009/103446
- WO-A2-2007/008476
- "ISO/TS 27687 - Nanotechnologies -- Terminology and definitions for nano-objects -- Nanoparticle, nanofibre and nanoplate", INTERNATIONAL STANDARD - ISO, ZUERICH, CH, Bd. ISO/TS 27687:2008(E), 1. Januar 2008 (2008-01-01), Seiten 1-7, XP008113666,
- "ISO 13468-2 Plastics -- Determination of the total luminous transmittance of transparent materials -- Part 2: Double-beam instrument", INTERNATIONAL STANDARD ISO/IEC, XX, XX, 1. Januar 1999 (1999-01-01), XP009158647, in der Anmeldung erwähnt

## Beschreibung

Die vorliegende Erfindung betrifft dunkle Mehrschichtkörper aus Polycarbonat, die sich durch einen glasartigen Tiefenglanzeffekt an der Oberfläche auszeichnen. Die Erfindung betrifft auch ein Verfahren zur Herstellung dieser Mehrschichtkörper.

Die Mehrschichtkörper sind aus Polycarbonat bzw. Polycarbonatblends aufgebaut. Die Polycarbonatblends können weitere Polymerisate, wie z.B. Elastomere bzw. Pfropfpolymerisate oder weitere Thermoplaste, wie z.B. Polyester enthalten.

Die Erfindung betrifft ferner die Verwendung der erfindungsgemäßen Mehrschichtkörper als Blenden für Fahrzeugaußenteile oder als Rahmenteile für Multimediagehäuse.

Dunkle Mehrschichtkörper aus Polycarbonat sind an sich bekannt.

Dennoch fehlte es bislang an Mehrschichtsystemen aus Polycarbonat bzw. Polycarbonatblends, welche sich durch einen glasartigen Tiefenglanzeffekt auszeichnen. Die Mehrschichtsysteme sind hierbei keine transparenten Körper sondern dunkle Mehrschichtkunstoffformteile, welche eine glasartige Oberfläche mit Tiefenglanzoptik aufweisen. Diese Mehrschichtkörper sind insbesondere für Fahrzeug-Außenteile geeignet. Sie müssen über eine ausgezeichnete Oberflächenqualität, einen Tiefenglanzeffekt sowie über eine ausgezeichnete Bewitterungsstabilität verfügen. Zu den Anwendungen zählen unter anderem Rahmenteile für Verscheibungen aus Glas wie z.B. Schiebedächer. Aufgrund der hohen Lebensdauer von Kraftfahrzeugen kommt es dabei insbesondere im Bereich hochpreisiger Automobile darauf an, daß der gewünschte qualitativ hochwertige Farbeindruck - hier der besonders schwarze Tiefenglanzeffekt - des Materials über den Zeitraum der Nutzungsdauer ohne nennenswerte Einbußen erhalten bleibt.

Diese Mehrschichtkörper bieten für den Einsatz im Fahrzeugbereich viele Vorteile gegenüber herkömmlichen Materialien wie z.B. Glas. Hierzu zählen z.B. erhöhte Bruchsicherheit und/oder Gewichtsersparnis, die im Fall von Automobilen eine höhere Insassensicherheit bei Verkehrsunfällen und einen niedrigeren Kraftstoffverbrauch ermöglichen. Schließlich lassen Werkstoffe, die thermoplastische Polymere enthalten, aufgrund der einfacheren Formbarkeit eine wesentlich größere Designfreiheit zu.

Kfz-Außenteile, welche im Kraftfahrzeug-, Schienenfahrzeug- und Luftfahrzeug- bzw. im Infrastrukturbereich eingesetzt werden, müssen zudem eine lange Lebensdauer aufweisen und dürfen während dieser nicht verspröden. Darüber hinaus sollen sich Farbe und Glanzeffekt über die Lebensdauer nicht oder nur geringfügig verändern. Ferner müssen die thermoplastischen Teile über eine ausreichende Kratzfestigkeit verfügen.

Aufgrund der hohen geforderten Lebensdauer und aufgrund der hohen Oberflächengüte und des Tiefenglanzeffekts wird als Material häufig Glas eingesetzt. Glas ist unempfindlich gegen UV-Strahlung, weist eine geringe Kratzempfindlichkeit auf und verändert die mechanischen Eigenschaften über lange Zeiträume nicht. Da als Pigmente anorganische Oxide, wie z.B. Eisenoxid, eingesetzt werden, verändern sich die Farbeigenschaften auch über lange Zeiträume praktisch nicht. Die Verwendung dieser Pigmente in thermoplastischen Materialien ist allerdings nicht möglich, da sie zu einem Abbau der entsprechenden Matrix führt.

Aufgrund der oben geschilderten Vorteile von Kunststoffen besteht daher der Bedarf an Materialien, die sowohl die guten physikalischen Eigenschaften von Thermoplasten als auch die hohe Oberflächenqualität wie auch den gewünschten Tiefenglanzeffekt entsprechend schwarzeingefärbter Gläser aufweisen.

Unter den transparenten thermoplastischen Kunststoffen sind zum Beispiel Polymere basierend auf Polycarbonat und Polymethylmethacrylat (PMMA) besonders gut für die Verwendung als Außenteile für Kfz-Anwendungen geeignet. Aufgrund der hohen Zähigkeit besitzt insbesondere Polycarbonat ein sehr gutes Eigenschaftsprofil für derartige Einsatzzwecke.

Um die Langlebigkeit von thermoplastischen Materialien zu verbessern, ist es bekannt, diese mit UV-Schutz und/oder Kratzfestbeschichtungen zu versehen. Darüber hinaus ist eine große Anzahl von Farbmitteln bekannt, die eine hohe Lichtechtheit aufweisen.

Es zeigte sich allerdings, dass die im Stand der Technik genannten thermoplastischen Zusammensetzungen nur unzureichend geeignet sind, wenn eine außerordentlich hohe Bewitterungsstabilität mit hoher Oberflächengüte und einem hohen Tiefenglanzeffekt erforderlich ist. Insbesondere für tief schwarze Bauteile mit einer Klavierlack-artigen Oberfläche für Außenanwendungen bietet der Stand der Technik keine Lösungsmöglichkeiten.

Im Stand der Technik werden schwarze oder dunkle Außenteile häufig mit Ruß eingefärbt, um den gewünschten Schwarz-Eindruck zu erhalten. Der Einsatz von Ruß ist allerdings problematisch, da er zu Oberflächendefekten führen kann. Ruß in nanoskaliger Form sollte aufgrund der geringen Teilchengröße eigentlich die Oberfläche nicht beeinflussen, jedoch bilden sich sehr leicht Agglomerate die dann wieder zu Oberflächenstörungen führen. Diese Oberflächenstörungen sind mit dem Auge wahrnehmbar. Ferner stellen diese Oberflächenstörungen aber für nachfolgende Beschichtung Defektstellen dar, so dass bei Bewitterung der Lack an dieser Stelle zu Delaminierung, Rissbildung etc. neigt. Deshalb ist eine hohe Oberflächengüte mit möglichst wenig Defektstellen sowohl aus optischen als auch aus technischen Gründen von großem Vorteil. Häufig wird auch versucht den Ruß in Form einer Dispersion in die thermoplastische Matrix einzubringen. Diese Dispergiermittel sind aber häufig funktionalisiert um die anorganischen Partikel in Dispersion zu halten. Diese funktionellen Gruppen schaden allerdings der thermoplastischen Matrix, insbesondere der Polycarbonatmatrix, und sind deshalb unerwünscht.
Wenn Ruß als Einfärbemittel verwendet wird, weisen die Spritzgussartikel häufig keinen Tiefenglanzeffekt auf, sondern wirken stumpf und teilweise aufgrund des Absorptionspektrums von Kohlenstoff leicht gelblich. Mit sehr geringen Rußkonzentrationen geht dagegen der tiefe Schwarzeindruck verloren.

So beschreibt die EP 1 865 027 A1 beispielsweise transparente Zusammensetzungen, u.a. eine Zusammensetzung enthaltend 100 Gew.-Teile Polycarbonat und 0,0001 Gew.-Teile Ruß. Eine solche Zusammensetzung weist eine Lichttransmission von etwa 43 % auf.

Auch mittels nanoskaliger oder feinteiliger Kohlenstoffmodifikationen wie z.B. Kohlenstoffnanoröhren, wie in WO 2009030357 beschrieben, oder Graphit, wie in JP 2003073557 gezeigt, kann eine hochglänzende Oberfläche erreicht werden. Jedoch wird über die Stab- bzw. Plättchen-artige Form der Teilchen dem Spritzgusskörper eine gewisse Oberflächenrauhigkeit aufgeprägt, welche unerwünscht ist.
Um die oben beschrieben Nachteile, welche mit Ruß oder anderen Kohlenstoffmodifikationen verbunden sind, zu vermeiden, werden häufig lösliche Farbstoffe eingesetzt, um einen hohen Oberflächenglanz - eine Art Klavierlackoptik - zu erzielen. Nachteilig an dieser Lösung ist allerdings, dass die Farbstoffe in relativ hoher Konzentration eingesetzt werden müssen, um einen ausreichenden Schwarzeindruck zu erreichen. Dies ist mit deutlich höheren Kosten im Vergleich zu Ruß verbunden. Ferner bleichen organische Farbstoffe häufig durch UV-Bestrahlung aus, so dass sich der Farbeindruck mit der Zeit verändert. Bestimmte Farbeinstellungen für Automobilaußenteile, die auch Farbstoffe nutzen, sind z.B. in JP 11106518 beschrieben.
Es bestand daher die Aufgabe ein schwarzes Fertigteil mit einer Lichttransmission von weniger als 0,1 % aus einem thermoplastischen Material - vorzugsweise aus Polycarbonat zu entwickeln - welches niedrige Kosten mit einer herausragenden Oberflächengüte, hohem Tiefenglanz, klavierlackartigem Schwarzeindruck sowie hoher Bewitterungsfestigkeit verbindet und sich für Rahmenteile im Kfz-Bereich oder für Multimediagehäuse, wie z.B. Fernsehrahmen o. ä., welche einer UV-Belastung ausgesetzt werden, geeignet sind.
Insbesondere sollten U-, O-förmige bzw. Rechteck-förmige schwarze Blenden, welche für Außenanwendungen im Kfz-Bereich geeignet sind, entwickelt werden. Diese Blenden zeichnen sich dadurch aus, dass sie Glaselemente wie Scheiben bzw. Schiebedächer umfassen bzw. einrahmen. Durch die schwarze Tiefenglanzoptik wirkt der Scheibenbereich vergrößert, da das Dach, wie z.B. ein Panoramadach als Vollglasoptik erscheint. Auch Zierblenden sind umfasst. Ferner sind Zwischenstücke, die Glaseinheiten optisch verbinden, gemeint. Ebenso Zwischenstücke zwischen A- und B-Säule. An dem Rahmen sind ggf. Versteifungsrippen, Montagehilfen und Bereiche zur Aufnahme der Kleberaupe angespritzt, um eine entsprechende leichte Montage zu ermöglichen. Ferner kann eine spezielle Formgebung, wie eine spezielle 3-dimensionale Form vorhanden sein. Da die Rahmen relativ groß sind und eine komplexe Geometrie aufweisen, muss das thermoplastische Material eine ausreichende Fließfähigkeit aufweisen, um im Spritzgußprozess, wie z.B. speziell dem Spritzprägeverfahren, zu entsprechenden Formkörpern verarbeitet werden zu können.

Eine weitere Aufgabe der vorliegenden Erfindung war es, ein Verfahren zur Herstellung von thermoplastischen Mehrschichtkörpern mit den oben beschriebenen Eigenschaften bereitzustellen.

Überraschenderweise konnte die Aufgabe durch spezielle Mehrschichtkunstoffformteile, welche eine äußerst geringe Oberflächenfehlerrate und eine UV- und Kratzfestbeschichtung aufweisen, gelöst werden. Dabei wird auf den Einsatz teurer Farbmittel und funktioneller Dispergiermittel verzichtet. Überraschend war, dass sich nur ganz bestimmte Konzentrationen eines bestimmten schwarzen Pigments in Kombination mit einer transparenten Lackschicht eignen, um den gewünschten Tiefenglanzeffekt zu erzielen. Ferner darf der Mehrschichtkörper nur eine sehr geringe Fehlerrate an der Oberfläche aufweisen.

Die Aufgabe konnte also durch eine erfindungsgemäße thermoplastische Polymer-Zusammensetzung hergestellt unter Verwendung eines erfindungsgemäßen Verfahrens und eine UV- und Kratzfestbeschichtung gelöst werden.

Der erfindungsgemäße Mehrschichtkörper umfasst:
1) Eine Basisschicht enthaltend
   - mindestens einen Thermoplasten, wobei der Thermoplast Polycarbonat oder ein Polycarbonatblend ist, weiter bevorzugt mit einer Schmelzvolumenrate von
      i. 7 cm³/(10 min) bis 25 cm³/(10 min),
      ii. bevorzugt 9 bis 21 cm³/(10 min), nach ISO 1133 (bei 300 °C und 1,2 kg Belastung),
   - nanoskaligen Ruß in einer Menge von
      i. 0,05 bis 0,15 Gew.-%,
      ii. bevorzugt 0,06 bis 0,12 Gew.-%,
      wobei der Ruß ein Farbruß mit einer mittleren Primärpartikelgröße von weniger als 100 nm, bestimmt durch Rasterelektronenmikroskopie, ist,
   - sowie mindestens ein Entformungsmittel auf Basis eines Fettsäureesters,
      i. bevorzugt ein Stearinsäureester,
      ii. insbesondere bevorzugt auf Pentaerythritbasis
         in einer Konzentration von
      iii. 0,1 bis 0,5 Gew.-%,
      iv. insbesondere bevorzugt von 0,20 bis 0,45 Gew.-%,
         wobei ein aus dieser Zusammensetzung hergestellter Spritzgusskörper eine Oberflächenfehlerrate von weniger als 10 bevorzugt weniger als 6 Oberflächendefekte pro cm² aufweist, wobei die Detektion der Oberflächenstörungen mittels Lichtmikroskopie durch Betrachtung im Auflicht durch einen Blaufilter im HLS-Farbsystem auf einer Skala von 0 bis 255 für die H, L und S-Werte erfolgt, wobei die HLS-Schwellenwerte zur Detektion der Oberflächenstörungen derart eingestellt werden, dass deren blaue Farbe mit H = 127 mit L-Werten größer 157 und S-Werten größer 107 erfasst wird, wobei blau erscheinende Oberflächenstörungen > 10 µm als Oberflächendefekte gewertet werden,
         und wobei sich die genannten Mengenangaben auf die Gesamtzusammensetzung der Basisschicht beziehen.
         Bevorzugt enthält die Basisschicht einen Thermostabilisator.

      Besonders bevorzugt ist der thermoplastische Kunststoff der Basisschicht Polycarbonat.
2) Mindestens auf einer Seite der Basisschicht eine
   - Kratzfestbeschichtung auf Polysiloxanbasis, enthaltend
      i. mindestens einen UV-Absorber,
         wobei
      ii. die Dicke der Kratzfestschicht von 2 bis 15 µm, insbesondere bevorzugt von 4,0 bis 12,0 µm, beträgt.
3) optional, in einer besonderen Ausführungsform, mindestens eine auf der Basisschicht angeordnete haftvermittelnde Schicht (Primerschicht) zwischen der Basisschicht und der Kratzfestschicht enthaltend
   i. mindestens einen UV-Absorber,
      wobei
   ii. die Dicke der Primerschicht 0,3 bis 8 µm, insbesondere bevorzugt 1,1 bis 4,0 µm, beträgt.

In einer weiteren bevorzugten Ausführungsform ist auf beiden Seiten der Basisschicht eine haftvermittelnde Schicht sowie eine Kratzfestschicht aufgetragen.

In einer bevorzugten Ausführungsform addieren sich die Werte der oben genannten Komponenten der Basisschicht zu 100 Gew.-%.

Die Tiefenoptik wird durch die erfindungsgemäße Kombination einer speziellen thermoplastischen Zusammensetzung enthaltend spezielle Mengen an nanoskaligen Ruß in einer Kombination mit speziellen Entformungsmitteln, wobei ein entsprechender Spritzgusskörper eine hohe Oberflächengüte (geringe Fehlerrate) aufweist, mit einer Primerschicht spezieller Dicke und einer Kratzfestschicht aus Polysiloxanlack erreicht. Nur die Kombination dieser Komponenten und Eigenschaften macht es möglich, einen derartigen Effekt zu erzielen.

Die thermoplastische Komponente der Basisschicht a) besteht aus:

einem thermoplastischen, vorzugsweise transparenten thermoplastischen Kunststoff, umfassend Polycarbonat oder ein Polycarbonatblend, ggf. umfassend Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona) weiter bevorzugt umfassend aromatische Polyester oder Polymethylmethacrylat, oder Mischungen der genannten Komponenten, wobei der transparente thermoplastische Kunststoff in einer Menge zugegeben wird, daß diese mit allen übrigen Komponenten 100 Gew.-% ergibt.

Auch Mischungen von mehreren transparenten thermoplastischen Polymeren, insbesondere wenn sie transparent miteinander mischbar sind, sind möglich, wobei in einer speziellen Ausführungsform eine Mischung aus Polycarbonat mit PMMA (weiter bevorzugt mit PMMA < 2 Gew.%) oder Polyester bevorzugt ist.

Geeignete Polycarbonate für die Herstellung der erfindungsgemäßen Kunststoffzusammensetzung sind alle bekannten Polycarbonate. Dies sind Homopolycarbonate, Copolycarbonate und thermoplastische Polyestercarbonate.

Als Blendpartner eignen sich auch kautschukmodifizierte Vinyl(co)polymerisate und/oder weitere Elastomere.

Die geeigneten Polycarbonate haben bevorzugt mittlere Molekulargewichte M̅_{w} von 10.000 bis 50.000, vorzugsweise von 14.000 bis 40.000 und insbesondere von 16.000 bis 32.000, ermittelt durch Gelpermeationschromatographie mit Polycarbonateichung. Die Herstellung der Polycarbonate erfolgt vorzugsweise nach dem Phasengrenzflächenverfahren oder dem Schmelze-Umesterungsverfahren, welche mannigfaltig in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate werden bevorzugt durch Reaktionen von Bisphenolverbindungen mit Kohlensäureverbindungen, insbesondere Phosgen oder beim Schmelzeumesterungsprozess Diphenylcarbonat bzw. Dimethylcarbonat, dargestellt.

Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt.

Diese und weitere Bisphenol- bzw. Diolverbindungen, die sich für die Polycarbonatsynthese einsetzen lassen, sind unter anderem offenbart in WO 2008037364 A1 (s.7, Z. 21 bis s. 10, Z. 5), EP 1 582 549 A1 ([0018] bis [0034]), WO 2002026862 A1 (S. 2, Z. 20 bis S. 5, Z. 14), WO 2005113639 A1 (S. 2, Z.1 bis S. 7, Z. 20).

Die Polycarbonate können linear oder verzweigt sein. Es können auch Mischungen aus verzweigten und unverzweigten Polycarbonaten eingestzt werden.

Geeignete Verzweiger für Polycarbonate sind aus der Literatur bekannt und beispielsweise beschrieben in den Patentschriften US-B 4 185 009 und DE 25 00 092 A1 (erfindungsgemäße 3,3-bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US-B 5 367 044 sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP 1 506 249 A1 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die Basisschicht 1) enthält Entformungsmittel auf Basis eines Fettsäureesters, bevorzugt eines Stearinsäureesters, insbesondere bevorzugt auf Pentaerythritbasis.

In einer besonderen Ausführungsform werden Pentaerythrittetrastearat (PETS) und/oder Glycerinmonostearat (GMS) eingesetzt.

Die Basisschicht 1) enthält ferner einen nanoskaligen Farbruß.

Ruß gemäß der vorliegenden Erfindung ist ein schwarzer pulverförmiger Feststoff, der je nach Qualität und Verwendung im wesentlichen aus Kohlenstoff besteht. Der Kohlenstoffgehalt von Ruß liegt im Allgemeinen bei 80,0 bis 99,9 Gew.-%. Bei nicht oxidativ nachbehandelten Rußen beträgt der Kohlenstoffgehalt bevorzugt 96,0 bis 95,5 Gew.-%. Durch Extraktion des Rußes mit organischen Lösungsmitteln, beispielsweise mit Toluol, können Spuren organischer Verunreinigungen auf dem Ruß entfernt werden und dadurch der Kohlenstoffgehalt auch auf größer als 99,9 Gew.-% erhöht werden. Bei oxidativ nachbehandelten Rußen kann der Sauerstoffgehalt bis zu 30 Gew.-%, bevorzugt bis zu 20 Gew.-%, insbesondere 5 bis 15 Gew.-% betragen.

Ruß besteht aus meist kugelförmigen Primärpartikeln mit einer Größe von bevorzugt 10 bis 500 nm, wobei die Farbruße in der Basisschicht gemäß der vorliegenden Erfindung eine mittlere Primärpartikelgröße von 10 bis 20 nm, bestimmt durch Rasterelektronenmikroskopie, aufweisen. Diese Primärpartikeln sind zu kettenförmigen oder verzweigten Aggregaten zusammengewachsen. Bei den Aggregaten handelt es sich im Allgemeinen um die kleinste in einem Dispergierungsverfahren zerteilbare Einheit des Rußes. Viele dieser Aggregate lagern sich wiederum durch intermolekulare (van-der-Waalssche) Kräfte zu Agglomeraten zusammen. Durch Variation der Herstellbedingungen können sowohl die Größe der Primärteilchen als auch deren Aggregierung (Struktur) gezielt eingestellt werden. Unter Struktur versteht der Fachmann dabei die Art der dreidimensionalen Anordnung der Primärpartikel in einem Aggregat. Von einer "hohen Struktur" spricht man bei Rußen mit stark verzweigten und vernetzten Aggregatstrukturen; bei weitgehend linearen, das heißt wenig verzweigten und vernetzten Aggregatstrukturen spricht man dagegen von "niedriger Struktur".

Als ein Maß für die Struktur eines Rußes wird im Allgemeinen die Öl-Adsorptions-Zahl gemessen nach ISO 4656 mit Dibutylphthalat (DBP) angegeben. Dabei ist eine hohe Öl-Adsorptions-Zahl ein Indikator für eine hohe Struktur.

Die Primärpartikelgröße eines Rußes lässt sich beispielsweise mittels Rasterelektronenmikroskopie ermitteln. Als ein Maß für die Primärpartikelgröße eines Rußes dient aber auch die BET-Oberfläche des Rußes bestimmt nach ISO 4652 mit Stickstoffadsorption. Dabei ist eine hohe BET-Oberfläche ein Indikator für eine kleine Primärpartikelgröße.

Die Dispergierbarkeit der Agglomerate eines Rußes hängt von der Primärpartikelgröße und der Struktur der Aggregate ab, wobei mit abnehmender Primärpartikelgröße und abnehmender Struktur die Dispergierbarkeit des Rußes in der Regel abnimmt.

Als technisches Produkt wird Industrieruß durch unvollständige Verbrennung oder Pyrolyse von Kohlenwasserstoffen hergestellt. Verfahren zur Herstellung von Industrieruß sind literaturbekannt. Bekannte Verfahren zur Herstellung von Industrierußen sind insbesondere das Furnace-, Gasruß-, Flammruß-, Acetylenruß- und Thermalruß-Verfahren.

Die Partikelgrößenverteilung der Primärteilchen sowie die Größe und Struktur der Primärteilchenaggregate bestimmen die Eigenschaften wie Farbtiefe, Grundton und Leitfähigkeit des Rußes. Leitruße besitzen dabei in der Regel kleine Primärteilchen und weitverzweigte Aggregate. Farbruße sind in der Regel Ruße mit sehr kleinen Primärpartikeln und werden oft nach der Herstellung nach einem der zuvor genannten Prozesse einer nachträglichen Oxidation unterzogen. Die dadurch auf die Rußoberfläche aufgebrachte oxidischen Gruppen sollen dabei die Verträglichkeit mit den Harzen, in denen die Farbruße eingebracht und dispergiert werden sollen, erhöhen.

Es kommen Farbruße mit einer mittleren Primärpartikelgröße von 10 bis 20 nm, bestimmt durch Rasterelektronenmikroskopie, zum Einsatz. In bevorzugter Ausführungsform besitzen diese eine mittlere Primärpartikelgröße, bestimmt durch Rasterelektronenmikroskopie, von 10 bis 99 nm, weiter bevorzugt von 10 bis 50 nm, besonders bevorzugt von 10 bis 30 nm, insbesondere von 10 bis 20 nm. Die besonders feinteiligen Farbruße werden daher im erfindungsgemäßen Verfahren eingesetzt, da die mit einer bestimmten Menge an Ruß erzielbare Farbtiefe und UV-Beständigkeit mit abnehmender Primärpartikelgröße zunimmt, andererseits aber auch deren Dispergierbarkeit abnimmt, weswegen insbesondere solche feinstteiligen Ruße einer Verbesserung in Bezug auf die Dispergierbarkeit bedürfen.

Die bevorzugt zum Einsatz kommenden Farbruße besitzen eine BET-Oberfläche bestimmt nach ISO 4652 durch Stickstoffadsorption von bevorzugt mindestens 20 m²/g, weiter bevorzugt von mindestens 50 m²/g, besonders bevorzugt von mindestens 100 m²/g, insbesondere von mindestens 150 m²/g.

Bevorzugt zum Einsatz kommende Farbruße sind darüber hinaus charakterisiert durch eine Öl-Adsorptions-Zahl gemessen nach ISO 4656 mit Dibutylphthalat (DBP) von bevorzugt 10 bis 200 ml/100g, weiter bevorzugt von 30 bis 150 ml/100g, besonders bevorzugt von 40 bis 120 ml/100g, insbesondere von 40 bis 80 ml/100g. Die Farbruße mit niedriger Öl-Adsorptions-Zahl erzielen in der Regel eine bessere Farbtiefe und sind insofern bevorzugt, lassen sich aber andererseits im Allgemeinen schwieriger dispergieren, weswegen insbesondere solche Ruße einer Verbesserung in Bezug auf die Dispergierbarkeit bedürfen.

Die zum Einsatz kommenden Ruße können und werden bevorzugt in pelletisierter oder geperlter Form eingesetzt. Die Perlung beziehungsweise Pelletisierung erfolgt dabei nach literaturbekannten Verfahren und dient einerseits der Erhöhung der Schüttdichte und der besseren Dosier(Fließ)eigenschaften, andererseits aber auch der Arbeitshygiene. Die Pellets beziehungsweise Perlen werden dabei in ihrer Härte bevorzugt so eingestellt, dass sie zwar Transport und Förderprozesse bei der Dosierung weitgehend unbeschadet überstehen, andererseits jedoch bei Einwirkung größerer mechanischer Scherkräfte, wie sie beispielsweise in handelsüblichen Pulvermischgeräten und/oder Compoundieraggregaten wirken, wieder vollständig in die Agglomerate zerscheren.

Kommerziell erhältliche und im Sinne der Erfindung geeignete Ruße sind unter einer Vielzahl von Handelsnamen und Formen, wie Pellets oder Pulver, erhältlich. So sind geeignete Ruße unter den Handelsnamen BLACK PEARLS®, als nass-verarbeitete Pellets unter den Namen ELFTEX®, REGAL® und CSX®, und in einer flockigen Erscheinungsform unter MONARCH®, ELFTEX®, REGAL® und MOGUL® - alle erhältlich von Cabot Corporation.

Insbesondere bevorzugt sind Ruße, die unter dem Handelsnamen BLACK PEARLS® (CAS-Nr. 1333-86-4) gehandelt werden.

In einer bevorzugten Ausführungsform enthält die Polymerzusammensetzung der Basisschicht weiterhin mindestens einen Thermo- bzw. Verarbeitungsstabilisator.

Bevorzugt geeignet sind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecyl phosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)pentaerythritol diphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)- pentaerythritoldiphosphit, Bis(2,4,6-tris(tert-butylphenyl)pentaerythritoldiphosphit, Tristea-rylsorbitoltriphosphit, Tetrakis(2,4-di-tert-butylphenyl)-4,4'-biphenylen diphosphonit, 6-Isooctyloxy-2,4,8, 1 0-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1 ,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos® 168 (Tris(2,4-di-tert-butyl-phenyl)-phosphit) und Tris(nonylphenyl)phosphit oder deren Mischungen eingesetzt.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox® 1010 (Pentaerythrit- 3-(4-hydroxy-3,5-di-tert-butylphenyl)propionat; CAS: 6683-19-8) und Irganox 1076® (2,6-Di-tert-butyl-4-(octadecanoxycarbonylethyl)phenol) eingesetzt.

In einer speziellen Ausführungsform der vorliegenden Erfindung werden die erfindungsgemäßen Phosphinverbindungen gemeinsam mit einem Phosphit oder einem phenolischen Antioxidans oder einer Mischung aus den beiden letztgenannten Verbindungen eingesetzt.

Die Thermo- und Verarbeitungsstabilisatoren werden in Mengen von 0,00 Gew.-%- 0,20 Gew.-%, bevorzugt 0,01 Gew.-% - 0,10 Gew.-%, weiter bevorzugt von 0,01 Gew.-% bis 0,05 Gew.-%, und besonders bevorzugt von 0,015 Gew.-% bis 0,040 Gew.-% eingesetzt.

Optional enthält die erfindungsgemäße Basisschicht weiterhin einen Ultraviolett-Absorber. Zum Einsatz in der erfindungsgemäßen Polymer-Zusammensetzung geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

In einer besonders bevorzugten Ausführungsform enthält die Basisschicht keine UV-Absorber.

Sollten UV-Absorber in der Basisschicht eingesetzt werden sind folgende Ultraviolett-Absorber geeignet, wie z.B. Hydroxy-Benzotriazole, wie 2-(3',5'-Bis-(1,1-dimethylbenzyl)-2'-hydroxyphenyl)-benzotriazol (Tinuvin® 234, Ciba Spezialitätenchemie, Basel), 2-(2'-Hydroxy-5'-(tert.-octyl)-phenyl)-benzotriazol (Tinuvin® 329, Ciba Spezialitätenchemie, Basel), 2-(2'-Hydroxy-3'-(2-butyl)-5'-(tert.butyl)-phenyl)-benzotriazol (Tinuvin® 350, Ciba Spezialitätenchemie, Basel), Bis-(3-(2H-benztriazolyl)-2-hydroxy-5-tert.-octyl)methan, (Tinuvin® 360, Ciba Spezialitätenchemie, Basel), (2-(4,6-diphenyl-1,3,5-triazin-2-yl)-5-(hexyloxy)-phenol (Tinuvin® 1577, Ciba Spezialitätenchemie, Basel), sowie der Benzophenone 2,4-Dihydroxy-benzophenon (Chimasorb® 22, Ciba Spezialitätenchemie, Basel) und 2-Hydroxy-4-(octyloxy)-benzophenon (Chimassorb® 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul® 3030, BASF AG Ludwigshafen), 2-[2-hydroxy-4-(2-ethylhexyl)oxy]phenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate (Hostavin® B-Cap, Clariant AG).

Es können auch Mischungen dieser Ultraviolett-Absorber eingesetzt werden.

Die UV-Absorber werden bevorzugt in einer Menge von 0,0 Gew% bis 20,0 Gew.-%, bevorzugt von 0,05 Gew% bis 10,00 Gew.-%, weiter bevorzugt von 0,10 Gew% bis 1,00 Gew.-%, noch weiter bevorzugt 0,10 Gew.-% bis 0,50 Gew.-% sowie ganz besonders bevorzugt 0,10 Gew.-% bis 0,30 Gew.-% eingesetzt.

Optional enthält die Basisschicht 0,0 Gew.-% bis 5,0 Gew.-%, bevorzugt 0,01 Gew.-% bis 1,00 Gew.-% mindestens eines weiteren Additivs. Bei den weiteren Additiven handelt es sich um übliche Polymeradditive, wie z.B. die in EP-A 0 839 623, WO-A 96/15102, EP-A 0 500 496 oder "Plastics Additives Handbook", Hans Zweifel, 5th Edition 2000, Hanser Verlag, München beschrieben sind wie z.B. Flammschutzmittel, Antistatika oder Fließverbesserer. Die bereits genannten Komponenten der Basisschicht sind in diesem Zusammenhang ausdrücklich ausgenommen.

Die obigen Mengenangaben beziehen sich jeweils auf die gesamte Polymer-Zusammensetzung. In einer alternativen Ausführungsform besteht die Basisschicht lediglich aus den zuvor genannten Komponenten.

Ferner können kautschukmodifizierte Vinyl(co)polymerisate als Blendpartner eingesetzt werden.

Bevorzugte kautschukmodifizierte Vinyl(co)polymerisate umfassen ein oder mehrere Pfropfpolymerisate von
- 5 bis 95, vorzugsweise 20 bis 90, insbesondere 25 bis 50 Gew.-%, bezogen auf das kautschukmodifizierte Vinyl(co)polymerisat, wenigstens eines Vinylmonomeren auf
- 95 bis 5, vorzugsweise 80 bis 10, insbesondere 75 bis 50 Gew.-%, bezogen auf das kautschukmodifizierte Vinyl(co)polymerisat, einer oder mehrerer Pfropfgrundlagen.

Die Pfropfgrundlage hat im allgemeinen eine mittlere Teilchengröße (d₅₀-Wert) von 0,05 bis 10 µm, vorzugsweise 0,1 bis 2 µm, besonders bevorzugt 0,15 bis 0,6 µm.

Vinylmonomere sind vorzugsweise Gemische aus
- 50 bis 99, bevorzugt 60 bis 80, insbesondere 70 bis 80 Gew.-Teilen Vinylaromaten und/oder kernsubstituierten Vinylaromaten (wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und
- 1 bis 50, bevorzugt 20 bis 40, insbesondere 20 bis 30 Gew.-Teilen Vinylcyanide (ungesättigte Nitrile wie Acrylnitril und Methacrylnitril) und/oder (Meth)Acrylsäure-(C₁-Cs)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Vinylmonomere sind solche Mischungen bestehend aus mindestens einem Monomeren ausgewählt aus der Gruppe bestehend aus Styrol, α-Methylstyrol und Methylmethacrylat und mindestens einem weiteren Monomeren ausgewählt aus der zweiten Gruppe bestehend aus Acrylnitril, Maleinsäureanhydrid und Methylmethacrylat. Besonders bevorzugte Vinylmonomere sind Mischungen aus Styrol und Acrylnitril.

Für die Pfropfpolymerisate geeignete Pfropfgrundlagen sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. Vinylmonomeren gemäß Definition zuvor).

Die Glasübergangstemperatur der Pfropfgrundlagen liegt vorzugsweise < 10°C, weiter bevorzugt < 0°C, besonders bevorzugt < -20°C.

Die Glasübergangstemperaturen wird mittels dynamischer Differenz-Thermoanalyse (DSC) gemäß der Norm DIN EN 61006 bei einer Heizrate von 10 K/min mit Definition der Tg als Mittelpunkttemperatur (Tangentenmethode) bestimmt.

Besonders bevorzugt ist reiner Polybutadienkautschuk.

Besonders bevorzugte kautschukmodifizierte Vinyl(co)polymerisate sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die kautschukmodifizierten Vinyl(co)polymerisate werden durch radikalische Polymerisation, z.B. durch Emulsions-, Suspensions-, Lösungs- oder Massepolymerisation, vorzugsweise durch Emulsions- oder Massepolymerisation, besonders bevorzugt durch Emulsionspolymerisation, hergestellt.

Besonders geeignete kautschukmodifizierte Vinyl(co)polymerisate sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Auch kautschukfreie Blendpartner können eingesetzt werden. Einsetzbare kautschukfreie Vinyl(co)polymerisate sind beispielsweise und bevorzugt Homo- und/oder Copolymerisate von mindestens einem Monomeren aus der Gruppe der Vinylaromaten, Vinylcyanide (ungesättigte Nitrile), (Meth)Acrylsäure-(C1 bis C8)-Alkylester, ungesättigten Carbonsäuren sowie Derivaten (wie Anhydride und Imide) ungesättigter Carbonsäuren.

Insbesondere geeignet sind (Co)Polymerisate aus
- 50 bis 99 Gew.-Teilen, bevorzugt 60 bis 80 Gew.-Teilen, insbesondere 70 bis 80 Gew.-Teilen, jeweils bezogen auf das (Co)Polymerisat, mindestens eines Monomeren ausgewählt aus der Gruppe der Vinylaromaten (wie beispielsweise Styrol, -Methylstyrol), kernsubstituierten Vinylaromaten (wie beispielsweise p-Methylstyrol, p-Chlorstyrol) und (Meth)Acrylsäure-(C1-C8)- Alkylester (wie beispielsweise Methylmethacrylat, n-Butylacrylat, tert.-Butylacrylat) und
- 1 bis 50 Gew.-Teilen, bevorzugt 20 bis 40 Gew.-Teilen, insbesondere 20 bis 30 Gew.-Teilen, jeweils bezogen auf das (Co)Polymerisat, mindestens eines Monomeren ausgewählt aus der Gruppe derVinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Besonders bevorzugt ist das Copolymerisat aus Styrol und Acrylnitril.

Derartige Vinyl(co)polymerisate sind bekannt und lassen sich durch radikalische Polymerisation,insbesondere durch Emulsions-, Suspensions-, Lösungs- oder Massepolymerisation herstellen.

In erfindungsgemäß besonders bevorzugter Ausführungsform weisen die die Vinyl(co)polymerisate eine gewichtsgemittelte Molmasse Mw (bestimmt per Gelchromatographie in Dichlormethan mit Polystyrol-Eichung) von 50.000 bis 250.000 g/mol, besonders bevorzugt von 70.000 bis 180.000 g/mol auf.

Die Zusammensetzung muss unter den für Thermoplaste üblichen Temperaturen, d.h. bei Temperaturen oberhalb von 300 °C, wie z.B. 350 °C verarbeitbar sein, ohne daß sich bei der Verarbeitung die optischen Eigenschaften wie z.B. der Tiefenglanz oder die mechanischen Eigenschaften deutlich verändern.

Die Herstellung der Polymer-Zusammensetzung für die erfindungsgemäße Basisschicht enthaltend die oben genannten Komponenten erfolgt mit gängigen Einarbeitungsverfahren durch Zusammenführung, Vermischen und Homogenisieren, wobei insbesondere die Homogenisierung bevorzugt in der Schmelze unter Einwirkung von Scherkräften stattfindet. Dazu wird bevorzugt Polycarbonat und ggf. weiteren Komponenten der Polymer-, bevorzugt der Polycarbonat-Formmasse auf üblichen Schmelze-Mischaggregaten wie z.B. auf Ein- oder Mehrwellen-Extrudern oder auf Knetern in der Schmelze unter üblichen Bedingungen innig vermischt, extrudiert und granuliert. Sie können entweder separat als Granulate bzw. Pellets über Dosierwaagen oder Seitenfüttereinrichtungen oder auch bei erhöhter Temperatur als Schmelze mittels Dosierpumpen an geeigneter Stelle in den Feststoffförderbereich des Extruders oder in die Polymerschmelze dosiert werden. Die Masterbatches in Form von Granulaten oder Pellets können auch mit anderen partikelförmigen Verbindungen zu einer Vormischung vereinigt und dann gemeinsam über Dosiertrichter oder Seitenfüttereinrichtungen in den Feststoffförderbereich des Extruders oder in die Polymerschmelze im Extruder zugeführt werden. Bei dem Compoundier-Aggregat handelt es sich bevorzugt um einen Zweiwellenextruder, besonders bevorzugt um einen Zweiwellenextruder mit gleichsinnig rotierenden Wellen, wobei der Zweiwellenextruder ein Längen/DurchmesserVerhältnis der Schneckenwelle bevorzugt von 20 bis 44, besonders bevorzugt von 28 bis 40 aufweist. Ein derartiger Zweiwellenextruder umfasst eine Aufschmelz- und Mischzone oder eine kombinierte Aufschmelz- und Mischzone (diese "Aufschmelz- und Mischzone" wird nachfolgend auch als "Knet- und Aufschmelzzone" bezeichnet) und optional eine Entgasungszone, an der ein absoluter Druck pabs von bevorzugt höchstens 800 mbar, weiter bevorzugt höchstens 500 mbar, besonders bevorzugt höchstens 200 mbar eingestellt wird. Die mittlere Verweilzeit der Mischungszusammensetzung im Extruder ist bevorzugt auf maximal 120 s, besonders bevorzugt maximal 80 s, insbesondere bevorzugt auf max. 60 s begrenzt. Die Temperatur der Schmelze des Polymers beziehungsweise der Polymerlegierung am Austritt des Extruders beträgt in bevorzugter Ausführungsform 200°C bis 400°C.

Das Verfahren zur Herstellung der bewitterungsstabilen Mehrschichtkunstoffformteilen umfaßt die Schritte der Anfertigung eines Farbruß-haltigen Konzentrats, der Herstellung eines Compounds enthaltend Polycarbonat und das Farbruß-haltige Konzentrat, die Herstellung eines entsprechenden Formteils sowie die Beschichtung des Formteils in einem ein- bevorzugt einem zweistufigen Beschichtungsprozesses.

In einer besonderen Ausführungsform besteht das Verfahren zur Herstellung von bewitterungsstabilen Mehrschichtkunststoffformteilen mit Tiefenganzoptik aus folgenden, aufeinanderfolgenden Schritten:
I. Herstellung eines Ruß-PETS Konzentrat (Komponente A)

Geeignete Mischaggregate zur Herstellung der Ruß-Fettsäureester-Konzentrate (Schritt 1 des erfindungsgemäßen Verfahrens) sind Ein- oder Mehrwellen-Extruder oder Kneter, wie z.B. Buss Ko-Kneter oder Innenmischer oder Scherwalzen, und alle Mischaggregate, mit denen eine ausreichend hohe Scherenergie in die Mischung aus Fettsäureester-Schmelze und Ruß eingebracht werden kann, um ggf. feste Ruß-Agglomerate ausreichend fein zu zerteilen und somit den Ruß in dem Fettsäureester gleichmäßig zu verteilen.

Die Ausgangskomponenten Ruß und Fettsäureester werden dabei entweder getrennt oder als Pulver- oder Korn- oder Granulat-Mischung dem Compoundier-Aggregat zugeführt und in der Schmelze bei einer Beheizungstemperatur der Gehäuse von 25°C bis 200 °C, vorzugsweise 30°C bis 130°C, innig vermischt.

Die so erhaltenen Konzentrate haben in Abhängigkeit von ihrem Ruß-Gehalt und dem eingesetzten Fettsäureester bei Raumtemperatur bevorzugt eine feste Konsistenz. Die Ruß-Masterbatches werden für eine Dosierung als Feststoff zu Schmelzesträngen ausgeformt, optional in der Schmelze über ein feinmaschiges Sieb (10 - 100 µm Maschenweite, vorzugsweise 20 - 50 µm) filtriert, um unvollständig zerteilte Ruß-Agglomerate zurück zu halten, und danach auf Temperaturen unter 40°C, vorzugsweise unter 30 °C abgekühlt und nachfolgend granuliert.

Geeignete Granulier-Vorrichtungen zur Herstellung genügend feinteiliger Granulate/Pellets des Ruß-Masterbatches, die sich in der anschließenden Compoundierung der PolycarbonatFormmassen gut dosieren lassen, sind Unterwasser- oder Heißabschlag-Wasserring-Granulatoren. Die so erhaltenen Granulate oder Pellets haben eine maximale Länge von bevorzugt 8 mm, besonders bevorzugt von maximal 5 mm, und eine minimale Länge von bevorzugt 0,5 mm, besonders bevorzugt minimal 1 mm, wobei die Länge die Achse in Richtung der größten Ausdehnung eines Körpers definiert.

In einer alternativen Ausführungsform wird das Masterbatch als Pulver mit einem maximalen Durchmesser kleiner 0,5 mm und minimal 0,1 mm verwendet.

Der Anteil von Ruß im Konzentrat kann in relativ weiten Grenzen von 3 Gew.-% bis 70 Gew.-% bezogen auf Masterbatch variieren, vorzugsweise liegt der Ruß-Gehalt von 30 Gew.-% bis 70 Gew.-%, weiter bevorzugt von 35 Gew.-% bis 65 Gew.-%, besonders bevorzugt zwischen 40 und 62 Gew-%.
II. Herstellung eines Compounds (Komponente B) aus Komponente A und Polycarbonat mit einem MVR von 7 cm³/(10 min) bis 25 cm³/(10 min) bevorzugt 9 bis 21 cm³/(10 min) nach ISO 1133 (bei 300 °C und 1,2 kg Belastung) enthaltend Thermostabilisator, insbesondere bevorzugt Triphenylphosphin, so dass die Zusammensetzung 0,05 bis 0,15 bevorzugt 0,06 bis 0,12 Gew.-% an Ruß und 0,1 bis 0,5 Gew.-% insbesondere bevorzugt von 0,2 bis 0,45 Gew. an PETS aufweist.
III. Herstellung eines Formteils aus Komponente B in entsprechender Formteilgeometrie, vorzugsweise bei einer Werkzeugtemperatur von 60 - 150°C.
IV. Beschichtung des Formteils im Flutverfahren mit einer Primerlöung enthaltend
   a.) organisches Bindematerial, das eine Haftvermittlung zwischen PC und einem polysiloxanbasierten Lack ermöglicht
   b.) Mindestens einen UV-Absorber

### c.) Lösemittel

Ablüften des Bauteils für 10 - 60 min bei Raumtemperatur und Härtung für 5 min bis 60 min bei 100 - 135 °C.
V. Beschichtung des Formteils mit einem Siloxanlack im Flutverfahren enthaltend a.) Siliciumorganische Verbindungen der Formel RₙSiX₄₋ₙ (mit n von 1 bis 4) wobei R für aliphatische C1 bis C10 Reste, bevorzugt Methyl-, Ethyl-, Propyl-, Isopropyl-, Butyl-, und Isobutyl-, sowie Arylreste, bevorzugt Phenyl, und substituierte Arylreste steht und X für H, aliphatische C1 bis C10 Reste, bevorzugt Methyl-, Ethyl-, Propyl-, Isopropyl-, Butyl-, und Isobutyl-, sowie Arylreste, bevorzugt Phenyl, substituierte Arylreste, für OH, Cl steht oder partielle Kondensate derselben.
   b.) anorganische feinteilige Verbindung, bevorzugt SiO2
   c.) ein Lösemittel auf Alkoholbasis
   d.) mindestens ein UV-Absorber
Ablüften des Bauteils für 10 - 60 min bei Raumtemperatur und Härtung für 10 min bis 120 min bei 100 - 140 °C.

Das Formteil dient bevorzugt zur Verwendung als Blende im Automobilbereich, z.B. als Blendenverkleidungen für A, B, oder C-Säulen oder als U-, O-förmige bzw. Rechteck-förmige Einfassungen für z.B. Glaselemente im Dachbereich. Auch Zierblenden sind umfasst. Ferner sind Zwischenstücke, die Glaseinheiten optisch verbinden, gemeint. Ebenso Zwischenstücke zwischen A- und B-Säule. Ferner sind diese Formteile für Multimediagehäuse, wie z.B. Fernsehrahmen, geeignet.

Im Schritt III des Verfahrens können die Zusammensetzungen beispielsweise durch Heißpressen, Spinnen, Blasformen, Tiefziehen, Extrudieren oder Spritzgießen in den erfindungsgemäßen Formkörper überführt werden. Bevorzugt ist hierbei das Spritzgießen oder Spritzprägen.

Spritzgießverfahren sind dem Fachmann bekannt und beispielsweise im "Handbuch Spritzgiessen", Friedrich Johannnaber/Walter Michaeli, München; Wien: Hanser, 2001, ISBN 3-446-15632-1 oder "Anleitung zum Bau von Spritzgiesswerkzeugen", Menges/Michaeli/Mohren, München; Wien: Hanser, 1999, ISBN 3-446-21258-2 beschrieben.

Spritzguß umfasst hier alle Spritzgießverfahren einschließlich Mehrkomponentenspritzguss und Spritzprägeverfahren.

Zur Herstellung von ein- und mehrkomponentigen Kunststoffformteilen werden die in der Kunststoffverarbeitung bekannten Spritzguss- und Spritzprägevarianten eingesetzt. Herkömmliche Spritzgussverfahren ohne Spritzprägetechnik werden insbesondere für die Herstellung von kleineren Spritzgießteilen verwendet, bei welchen kurze Fließwege auftreten und mit moderaten Spritzdrücken gearbeitet werden kann. Beim herkömmlichen Spritzgussverfahren wird die Kunststoffmasse in eine zwischen zwei geschlossenen lagefesten Formplatten ausgebildete Kavität eingespritzt und verfestigt sich dort.

Spritzprägeverfahren unterscheiden sich von herkömmlichen Spritzgussverfahren dadurch, dass der Einspritz- und/oder Verfestigungsvorgang unter Ausführung einer Formplattenbewegung durchgeführt wird. Beim bekannten Spritzprägeverfahren sind die Formplatten vor dem Einspritzvorgang bereits etwas geöffnet, um die bei der späteren Verfestigung auftretende Schwindung auszugleichen und den benötigten Spritzdruck zu reduzieren. Schon zu Beginn des Einspritzvorganges ist daher eine vorvergrößerte Kavität vorhanden. Tauchkanten des Werkzeuges garantieren auch bei etwas geöffneten Formplatten noch eine ausreichende Dichtigkeit der vorvergrößerten Kavität. Die Kunststoffmasse wird in diese vorvergrößerte Kavität eingespritzt und währenddessen bzw. anschließend unter Ausführung einer Werkzeugbewegung in Schließrichtung verpresst. Insbesondere bei der Herstellung von großflächigen und dünnwandigen Formteilen mit langen Fließwegen ist die aufwändigere Spritzprägetechnik bevorzugt oder ggf. zwingend erforderlich. Nur auf diese Weise wird eine Reduzierung der bei großen Formteilen benötigten Spritzdrücke erreicht. Ferner können Spannungen bzw. Verzug im Spritzgießteil, welche infolge hoher Spritzdrücke auftreten, durch Spritzprägen vermieden werden. Dies ist besonders bei der Herstellung von optischen Kunststoffanwendungen, wie beispielsweise Verscheibung (Fenster) in Kraftfahrzeugen, wichtig, da bei optischen Kunststoffanwendungen erhöhte Anforderungen an die Spannungsfreiheit einzuhalten sind.

Neben dem oben genannten bevorzugten Verfahren sind verschiedene Methoden bekannt, um eine Kratzfestbeschichtung auf Kunststoffartikeln herzustellen. Beispielsweise können Epoxy-, Acryl-, Polysiloxan-, kolloidales Kieselgel-, oder anorganisch/organisch (Hybridsysteme) basierte Lacke verwendet werden. Diese Systeme können über beispielsweise über Tauchverfahren, Spincoating, Sprühverfahren, oder Fließbeschichtung aufgebracht werden. Die Aushärtung kann thermisch oder mittels UV-Bestrahlung erfolgen. Es können Ein- oder Mehrschichtsysteme verwendet werden. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasmagestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein.

Für Polycarbonate wird bevorzugt ein UV-Absorber enthaltener Primer eingesetzt, um die Haftung des Kratzfestlackes zu verbessern. Der Primer kann weitere Stabilisatoren wie z.B. HALS-Systeme (Stabilisatoren auf Basis sterisch gehinderter Amine), Haftvermittler, Fließhilfsmittel enthalten. Das jeweilige Harz kann aus einer Vielzahl von Materialien ausgewählt werden und ist z.B. in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melaminbasierte, Epoxy- und Alkyd-Systeme oder Mischungen dieser Systeme eingesetzt werden. Das Harz wird meist in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 140 °C eingesetzt - häufig nach dem ein Großteil des Lösemittels kurzzeitig bei Raumtemperatur entfernt wurde. Kommerziell erhältliche Systeme sind z.B. SHP470, SHP470FT und SHP401 der Firma Momentive Performance Materials. Derartige Beschichtungen sind z.B. in US 6350512 B1, US 5869185, EP 1308084, WO 2006/108520 beschrieben.

Kratzfest-Lacke (Hard-Coat) sind bevorzugt aus Siloxanen aufgebaut und enthalten bevorzugt UV-Absorber. Sie werden bevorzugt über Tauch- oder Fließverfahren aufgebracht. Die Aushärtung erfolgt bei Temperaturen von 50 °C - 140 °C. Kommerziell erhältliche Systeme sind z.B. AS4000, SHC5020 und AS4700 von Momentive Performance Materials. Derartige Systeme sind z.B. in US 5041313, DE 3121385, US 5391795, WO 2008/109072 beschrieben. Die Synthese dieser Materialien erfolgt meist über Kondensation von Alkoxy- und/oder Alkylalkoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Anstatt von Primer / Kratzfestbeschichtungs-Kombinationen können Einkomponenten-Hybrid-Systeme eingesetzt werden Diese sind z.B. in EP0570165 oder WO 2008/071363 oder DE 2804283 beschrieben. Kommerziell erhältlich Hybrid-Systeme sind z.B. unter den Namen PHC 587, PHC 587C oder UVHC 3000 von Momentive Performance Materials erhältlich.

Insbesondere bevorzugt wird als Primer ein haftvermittelnder UV-Schutzprimer auf Basis von Polymethylmethacrylat enthaltend 1-Methoxy-2-propanol und Diacetonalkohol als Lösemittel und eine UV-Absorberkombination enthaltend Dibenzoylresorcin und ein Traizinderivat verwendet. Der Decklack ist insbesondere bevorzugt ein Polysiloxandecklack aus einem Sol-Gel Kondensat aus Methyltrimethylsilan mit Kieselsol enthaltend einen silylierten UV-Absorber.

In einem besonders bevorzugten Verfahren erfolgt die Applikation des Lackes über das Flutverfahren, da es zu beschichteten Teilen mit hoher optischer Qualität führt.

Das Flutverfahren kann manuell mit Schlauch oder geeignetem Beschichtungskopf oder automatisch im Durchlauf über Flutlackierroboter- und gegebenenfalls Schlitzdüsen erfolgen. Hierbei können die Bauteile, sowohl hängend als auch in einem entsprechenden Warenträger gelagert, beschichtet werden.

Bei größeren und/oder 3D-Bauteilen wird das zu beschichtende Teil in einen geeigneten Warenträger eingehangen oder aufgesetzt.

Bei Kleinteilen kann die Beschichtung auch per Hand durchgeführt werden. Hierbei wird die zu schichtende flüssige Primer- oder Lacklösung ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten werden senkrecht an einer Klammer hängend nach den jeweiligen Herstellervorgaben abgelüftet und gehärtet.

Die erfindungsgemäßen Mehrschichtkörper lassen sich besonders bevorzugt als Rahmen für Scheiben-Modulen für Automobile, Schienen- und Luftfahrzeuge einsetzen. Auch andere Rahmenteile sind bevorzugt.

Im Rahmen der vorliegenden Erfindung umfaßt der UV-Bereich (Ultraviolett) den Wellenlängenbereich von 200 - 400 nm, visueller (sichtbarer) Bereich den Wellenlängenbereich von 400 - 780 nm und IR-Bereich (Infrarot) den Wellenlängenbereich von 780 - 1400 nm.

Unter Transparenz versteht man im Sinne der vorliegenden Erfindung, dass man den Hintergrund bei Durchsicht durch das transparente Material, z.B. in Form eines entsprechenden Formkörpers, deutlich erkennen kann. Bloße Lichtdurchlässigkeit wie z.B. bei Milchglas, durch welches der Hintergrund nur unscharf erscheint, genügt nicht, um das entsprechende Material als transparent zu bezeichnen. Transparente thermoplastischen Polymere beziehungsweise die thermoplastischen Polymer-Zusammensetzungen im Sinne der vorliegenden Erfindung weisen ferner eine Anfangstrübung vor Bewitterung von weniger als 5,0 %, bevorzugt 4,0 %, weiter bevorzugt weniger als 3,0 %, insbesondere bevorzugt weniger als 2,0 % auf (gemessen gemäß den vorliegenden Beispielen).

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

### Schmelzvolumenrate:

Die Bestimmung des Schmelzvolumenrate (MVR) erfolgt nach ISO 1133 (bei 300 °C; 1,2 kg).

### Lichttransmission (Ty):

Die Transmissionsmessungen wurden an einem Lambda 900 Spektralphotometer der Firma Perkin Elmer mit Photometerkugel nach ISO 13468-2 durchgeführt (d.h. Bestimmung der Gesamttransmission durch Messung der diffusen Transmission und direkten Transmission).

### Messung und Auswertung der Oberflächenstörungen:

Die Musterplatten werden mit einem Lichtmikroskop vom Typ Axioplan2 der Firma Zeiss mit einem 2,5x /0,075 Epiplan Neofluar Objektiv mit einer effektiven Auflösung von 3,97 µm/Pixel auf einem adaptierten computergesteuerten xy-Tisch ausgelesen. Dabei wird ein Bereich von 4 x 4 cm ausgewertet. Als Bildbearbeitungssoftware wird KS300 der Version 3.0 der Firma Zeiss verwendet. Die Probenoberfläche wird in Auflicht durch einen Blaufilter betrachtet. Die Detektion der blau erscheinenden Oberflächenstörungen erfolgt im HLS Farbsystem auf einer Skala von 0 bis 255 für die H (Hue)-, L(Lightness)- und S (Saturation)-Werte; dabei werden die HLS-Schwellenwerte zur Detektion der Oberflächenstörungen derart eingestellt, daß deren blaue Farbe (H = 127) mit L-Werten größer 157 und S-Werten größer 107 erfasst wird. Die Einstellung der L- und S-Werte erfolgt in den jeweiligen Histogrammdarstellungen. Es werden Oberflächenstörungen >10 µm als Fehler gewertet.

Es werden jeweils 3 Musterplatten vermessen und der entsprechende Mittelwert aus den 3 Platten als durchschnittliche Oberflächenfehlerrate gewertet. Die Messung erfolgt an einer unbeschichteten Musterplatte.

### Visueller Farbeindruck/Tiefenglanzeffekt:

Die Bestimmung des Farbeindrucks / des Tiefenglanzeffektes erfolgt visuell anhand von lackierten Musterplatten (s. Herstellung der Prüfkörper). Hierzu werden die Musterplatten unter Tageslicht vor einem weißen Hintergrund betrachtet und entsprechend klassifiziert (Klassifizierung s. Tabelle Prüfkörper und Meßergebnisse)

### Schwarzeindruck:

Der Schwarzeindruck wird als ausreichend angesehen, wenn bei visueller Abmusterung die Probe schwarz erscheint, ohne dass der Hintergrund zu erkennen ist und die Transmission bei 780 nm an einer 2 mm starken Musterplatte geringer als 0,01 % ist (Messung der Transmission siehe oben).

### Materialien zur Herstellung der Probekörper:

- Lineares Bisphenol-A-Polycarbonat mit Endgruppen basierend auf Phenol mit einem MVR von 12,5 cm³/10 min, gemessen bei 300 °C und 1,2 kg Belastung gemäß ISO 1033), enthaltend 250 ppm Triphenylphosphin (CAS 603-35-0) nachfolgend als PC 1 bezeichnet.
- Entformungsmittel: Pentaerythrittetrastearat (CAS 115-83-3) nachfolgend auch als PETS-1 bezeichnet
- Ruß- Pentaerythrittetrastearat Masterbatch enthaltend 58 % Ruß (nachfolgend als PETS-2) bezeichnet
- Als nanoskaliger Ruß -auch im Masterbatch - werden Black Pearls® 800 (CAS-No. 1333-86-4) (Partikelgröße ca. 17 nm) der Firma Cabot Corp. eingesetzt.

### Herstellung von Ruß/PETS Konzentrat PETS 2:

Es wurde ein Ko-Kneter Typ MDK/E 46 der Fa. Buss verwendet. Dabei werden 42 Gew.-% Pentaerythrittetrastearat sowie 58 Gew.-% nanoskaliger Ruß dosiert und der Entformer auf dem Buskneter aufgeschmolzen und mit dem Ruß innig vermischt. Die aus der Düsenplatte austretenden Schmelzestränge wurden anschließend mittels einer dem Fachmann bekannten Heißabschlag-Wasserring-Granulieranlage zu Granulaten mit einer Länge bis 5 mm granuliert und abgekühlt. Das an den Granulaten anhaftende Wasser wurde danach mittels einer Siebwuchtrinne und anschließender Trocknung in einem Wirbelbetttrockner entfernt.

### Herstellung der thermoplastischen Polymer-Zusammensetzungen durch Compoundierung:

Die Compoundierung der Polymer-Zusammensetzung erfolgte auf einem Zweiwellenextruder der Firma KraussMaffei Berstorff, TYP ZE25, bei einer Gehäusetemperatur von 260°C bzw. einer Massetemperatur von 270°C und einer Drehzahl von 100 Upm bei einem Durchsatz von 10kg/h mit der in den Beispielen angegebenen Mengen an Komponenten.

### Herstellung der Prüfkörper:

Das Granulat wird bei 120 °C für 3 Stunden im Vakuum getrocknet und anschließend auf einer Spritzgussmaschine vom Typ Arburg 370 mit einer 25-Spritzeinheit bei einer Massetemperatur von 300°C und einer Werkzeugtemperatur von 90 °C zu optischen Rundplatten mit einem Durchmesser von 80 mm und einer Dicke von 2,0 mm verarbeitet.

### Lackierung der Prüfkörper:

Als Primer wird das Produkt SHP470FT (Momentive Performance Materials Inc. Wilton, CT USA) verwendet. Als Schutzlack wird das Produkt AS 4700 (Momentive Performance Materials Inc. Wilton, CT USA) verwendet.

Die Beschichtung erfolgte in einem klimakontrollierten Beschichtungsraum unter den jeweiligen Vorgaben des Lackherstellers bei 23 bis 25°C und 40 bis 48% rel. Feuchte.

Die Prüfkörper wurden mit sogenannten Iso-Tüchern (LymSat® der Firma LymTech Scientific; gesättigt mit 70% Isopropanol und 30% deionisiertem Wasser) gereinigt, mit Isopropanol abgespült, 30 min an Luft getrocknet und mit ionisierter Luft abgeblasen.

Die Beschichtung der Probekörper erfolgt per Hand nach dem Flutverfahren. Hierbei wird die Primerlösung ausgehend von der oberen Kante des Kleinteiles in Längsrichtung über die Platte gegossen, während gleichzeitig der Ansatzpunkt des Primers auf der Platte von links nach rechts über die Plattenbreite geführt wird. Die geprimerte Platte wurde senkrecht an einer Klammer hängend nach den jeweiligen Herstellervorgaben bis zur Staubtrockene abgelüftet und im Umluftofen gehärtet (30 Minuten bei Raumtemperatur abgelüftet und 30 Minuten bei 125 °C gehärtet). Nach dem Abkühlen auf Raumtemperatur erfolgte die Beschichtung der geprimerten Fläche mit AS 4700. Nach der Ablüftung bis zur Staubtrockene erfolgte die Härtung 60 min bei 130°C im Umluftofen.

Die Primerschichtdicke und die Dicke des Topcoats können die Bewitterungseigenschaften beeinflussen.

Um eine ausreichende und vergleichbare Schutzwirkung gegen Bewitterung zu erreichen soll die Primerschichtdicke für die nachfolgenden Beispiele im Bereich 1,2 - 4,0 µm und die Dicke des Topcoats zwischen 4,0 und 8,0 µm liegen.

### Beispiel 1 (Vergleichsbeispiel)

Es wird eine Polymerzusammensetzung enthaltend die Mengen der folgenden Komponenten wie oben beschrieben durch Compoundierung hergestellt. Ruß und Entformungsmittel werden dabei nicht vorgemischt (Verwendung von PETS-1).

**Tabelle 1: Ergebnis Mikroscan; unbeschichtete Musterplatte**

| | |
|---|---|
| BlackPearls 800 | 0,16 Gew.-% |
| (CAS-Nr. 1333-86-4) | |
| PETS | 0,4 Gew.-% |
| PC1: | 99,44 Gew.-% |

| | **Fehler** / **cm²** |
|---|---|
| Platte 1 | 98 |
| Platte 2 | 90 |
| Platte 3 | 86 |
| ø | 91 |

Die Musterplatte wird wie oben beschrieben beschichtet und die optischen Eigenschaften ausgewertet. Die Ergebnisse sind in Tabelle 6 zusammengefasst.

### Beispiel 2 (Vergleichsbeispiel)

Es wird eine Polymerzusammensetzung enthaltend die Mengen der folgenden Komponenten wie oben beschrieben hergestellt. Dabei wird eine Ruß-PETS-Vormischung verwendet (PETS-2).

**Tabelle 2: Ergebnis Mikroscan; unbeschichtete Musterplatte (80,0 x 2,0 mm Rundplatte)**

| | |
|---|---|
| BlackPearls 800: | 0,16 Gew.-% |
| PETS: | 0,40 Gew.-% |
| PC1: | 90,44 Gew.-% |

| | **Fehler** / **cm²** |
|---|---|
| Platte 1 | 30 |
| Platte 2 | 8 |
| Platte 3 | 11 |
| ø | 16 |

Die Musterplatte wird wie oben beschrieben beschichtet und die optischen Eigenschaften ausgewertet. Die Ergebnisse sind in Tabelle 6 zusammengefasst.

### Beispiel 3 (Erfindungsgemäß)

Es wird eine Polymerzusammensetzung enthaltend die Mengen der folgenden Komponenten wie oben beschrieben durch Compoundierung hergestellt. Ruß und Entformungsmittel werden dabei nicht vorgemischt (Verwendung von PETS-1).

**Tabelle 3: Ergebnis Mikroscan; unbeschichtete Musterplatte (80,0 x 2,0 mm Rundplatte)**

| | |
|---|---|
| BlackPearls 800: | 0,08 Gew.-% |
| PETS-1: | 0,40 Gew.-% |
| PC1: | 99,52 Gew.-% |

| | **Fehler** / **cm²** |
|---|---|
| Platte 1 | 9 |
| Platte 2 | 6 |
| Platte 3 | 7 |
| ø | 8 |

Die Musterplatte wird wie oben beschrieben beschichtet und die optischen Eigenschaften ausgewertet. Die Ergebnisse sind in Tabelle 6 zusammengefasst.

### Beispiel 4 (Vergleichsbeispiel)

Es wird eine Polymerzusammensetzung enthaltend die Mengen der folgenden Komponenten wie oben beschrieben hergestellt. Ruß und Entformungsmittel werden dabei nicht vorgemischt (Verwendung von PETS 1).

**Tabelle 4: Ergebnis Mikroscan; unbeschichtete Musterplatte (80,0 x 2,0 mm Rundplatte)**

| | |
|---|---|
| BlackPearls 800: | 0,04 Gew.-% |
| PETS-1 | 0,4 Gew.-% |
| PC1: | 99,56 Gew.-% |

| | **Fehler** / **cm²** |
|---|---|
| Platte 1 | 10 |
| Platte 2 | 8 |
| Platte 3 | 7 |
| ø | 8 |

Die Musterplatte wird wie oben beschrieben beschichtet und die optischen Eigenschaften ausgewertet. Die Ergebnisse sind in Tabelle 6 zusammengefasst.

### Beispiel 5 (Erfindungsgemäß)

Es wird eine Polymerzusammensetzung enthaltend die Mengen der folgenden Komponenten wie oben beschrieben hergestellt; es wird eine Ruß-PETS-Vormischung verwendet (PETS-2).

**Tabelle 5: Ergebnis Mikroscan; unbeschichtete Musterplatte (80,0 x 2,0 mm Rundplatte)**

| | |
|---|---|
| BlackPearls 800: | 0,08 Gew.-% |
| PETS-2: | 0,40 Gew.-% |
| PC1: | 99,52 Gew.-% |

| | **Fehler** / **cm²** |
|---|---|
| Platte 1 | 3 |
| Platte 2 | 2 |
| Platte 3 | 4 |
| Ø | 3 |

Die Musterplatte wird wie oben beschrieben beschichtet und die optischen Eigenschaften ausgewertet. Die Ergebnisse sind in Tabelle 6 zusammengefasst.

**Tabelle 6: Visuelle Abmusterung der lackierten Probekörper (80,0 x 2,0 mm Rundplatte)**

| Beispiel | Oberflächenqualität Visuelle Abmusterung | Tiefenglanzeffekt | Transmission bei 780 nm | Schwarzeindruck |
|---|---|---|---|---|
| 1 (Vergleich) | -- | -- | <0,01 % | + |
| 2 (Vergleich) | O | - | <0,01 % | + |
| 3 (Erfindungsgemäß) | + | O | <0,01 % | + |
| 4 (Vergleich) | + | - | 0,08 % | - |
| 5 (Erfindungsgemäß) | + | + | <0,01 % | + |

| | | | | |
|---|---|---|---|---|
| Auswertung: + ansprechend ; O ausreichend; - schlecht; -- sehr schlecht | | | | |

Insgesamt ist festzustellen, dass nur die erfindungsgemäßen Mehrschichtkörper die geforderte Eigenschaftskombination von hohem Tiefenglanz, geringer bis keiner Transmission auch bei 780 nm sowie hoher Oberflächengüte aufweisen.

Die Vergleichsbeispiele zeigen, dass nur ganz bestimmte Kombinationen sinnvoll sind. Dies war überraschend und nicht aus dem Stand der Technik ableitbar. So weist z.B. der Mehrschichtkörper mit einer Rußmenge von 0,04 % überraschenderweise nicht weniger Fehler auf als eine Probe mit 0,08 %, während jedoch die Transmission deutlich zunimmt.

## Patentansprüche

1. Schwarzer Mehrschichtkörper mit Tiefenglanz mit einer Lichttransmission von weniger als 0,1 %, bestimmt gemäß ISO 13468-2 bei 780 nm an einer 2 mm dicken Platte, umfassend:
1) eine im Spritzgussverfahren hergestellte Basisschicht enthaltend
• mindestens einen Thermoplasten, wobei der Thermoplast Polycarbonat oder ein Polycarbonatblend ist,
• nanoskaligen Ruß in einer Menge von 0,05 bis 0,15 Gew.-%, wobei der Ruß ein Farbruß mit einer mittleren Primärpartikelgröße von 10 bis 20 nm, bestimmt durch Rasterelektronenmikroskopie, ist,
• ein Entformungsmittel auf Basis eines Fettsäureesters in einer Konzentration von 0,1 bis 0,5 Gew.-%,
wobei die im Spritzgussverfahren hergestellte Basisschicht eine Oberflächenfehlerrate von weniger als 10 Oberflächendefekte pro cm² aufweist, wobei die Detektion der Oberflächenstörungen mittels Lichtmikroskopie durch Betrachtung im Auflicht durch einen Blaufilter im HLS-Farbsystem auf einer Skala von 0 bis 255 für die H, L und S-Werte erfolgt, wobei die HLS-Schwellenwerte zur Detektion der Oberflächenstörungen derart eingestellt werden, dass deren blaue Farbe mit H = 127 mit L-Werten größer 157 und S-Werten größer 107 erfasst wird, wobei blau erscheinende Oberflächenstörungen > 10 µm als Oberflächendefekte gewertet werden,
und wobei sich die genannten Mengenangaben auf die Gesamtzusammensetzung der Basisschicht beziehen,
2) mindestens auf einer Seite der Basisschicht eine Kratzfestbeschichtung auf Polysiloxanbasis mit einer Dicke von 2 bis 15 µm, enthaltend mindestens einen UV-Absorber.

2. Mehrschichtkörper nach Anspruch 1, **dadurch gekennzeichnet, dass** auf der Basisschicht zusätzlich eine haftvermittelnde Schicht mit einer Dicke von 0,3 bis 8 µm zwischen der Basisschicht und der Kratzfestschicht angeordnet ist, enthaltend mindestens einen UV-Absorber.

3. Mehrschichtkörper nach Anspruch 1, **dadurch gekennzeichnet, dass** das Polycarbonat oder Polycarbonatblend eine Schmelzvolumenrate von 7 cm³/(10 min) bis 25 cm³/(10 min), bestimmt nach ISO 1133 bei 300°C und 1,2 kg Belastung, aufweist.

4. Mehrschichtkörper nach einem der vorhergehenden Ansprüche, **dadurch gekennzeichnet, dass** Entformer und Ruß als Masterbatch von Ruß im Entformer eingebracht werden.

5. Mehrschichtkörper nach einem der vorhergehenden Ansprüche, **dadurch gekennzeichnet, dass** das Entformungsmittel Pentaerythrittetrastearat ist.

6. Mehrschichtkörper nach einem der vorhergehenden Ansprüche, **dadurch gekennzeichnet, dass** die Basisschicht einen Thermostabilisator enthält.

7. Mehrschichtkörper nach einem der vorhergehenden Ansprüche, **dadurch gekennzeichnet, dass** auf beiden Seiten der Basisschicht eine Kratzfestschicht sowie optional eine haftvermittelnde Schicht aufgetragen ist.

8. Mehrschichtkörper nach einem der vorhergehenden Ansprüche, **dadurch gekennzeichnet, dass** die Kratzfestschicht ein Polysiloxanlack ist.

9. Verfahren zur Herstellung eines schwarzen Mehrschichtkörpers mit Tiefenglanzoptik nach Anspruch 1, umfassend die Schritte:
- Anfertigung eines Farbruß-haltigen Masterbatch mit Entformungsmittel,
- Herstellung eines Compounds enthaltend Polycarbonat und das Farbruß-haltige Masterbatch in den Konzentrationen nach Anspruch 1,
- Herstellung eines Formteils,
- Beschichtung des Formteils mit einer Kratzfestschicht in einem einstufigen Beschichtungsprozesses.

10. Verfahren nach Anspruch 9, **dadurch gekennzeichnet, dass** vor der Beschichtung des Formteils mit der Kratzfestschicht eine Primerschicht aufgetragen wird.

11. Verfahren nach Anspruch 9 oder 10, **dadurch gekennzeichnet, dass** die Schritte in der gegebenen Reihenfolge ausgeführt werden.

12. Verwendung der Mehrschichtkörper gemäß Anspruch 1 als Fahrzeug-Außenteil, Fahrzeug-Innenteil und für Rahmenteile für Verscheibungen aus Glas oder Polycarbonat.

## Claims

1. Black multilayer product with deep gloss effect with light transmittance less than 0.1%, determined in accordance with ISO 13468-2 at 780 nm on a sheet of thickness 2 mm comprising:
1) a base layer produced by the injection-moulding process comprising
• at least one thermoplastic, where the thermoplastic is polycarbonate or a polycarbonate blend,
• a quantity of from 0.05 to 0.15% by weight of nanoscale carbon black, where the carbon black is a pigment black with average primary particle size from 10 to 20 nm, determined by scanning electron microscopy,
• a mould-release agent based on a fatty acid ester in a concentration of from 0.1 to 0.5% by weight,
where the surface defect rate of the base layer produced in the injection-moulding process is less than 10 surface defects per cm², where the surface disturbances are detected by means of optical microscopy by viewing in incident light through a blue filter in the HLS colour system on a scale from 0 to 255 for the H, L and S values, where the threshold HLS values for detecting surface disturbances are set in a manner such that a blue colour thereof is captured at H = 127 with L values greater than 157 and with S values greater than 107, where surface disturbances > 10 µm of blue appearance are evaluated as surface defects,
and where the abovementioned quantitative data are based on the entire composition of the base layer,
2) at least on one side of the base layer, a scratch-resistant polysiloxane-based coating of thickness from 2 to 15 µm, comprising at least one UV absorber.

2. Multilayer product according to Claim 1, **characterized in that** arranged on the base layer there is additionally an adhesion-promoting layer of thickness from 0.3 to 8 µm between the base layer and the scratch-resistant layer, comprising at least one UV absorber.

3. Multilayer product according to Claim 1, **characterized in that** the melt volume rate of the polycarbonate or polycarbonate blend is from 7 cm²/(10 min) to 25 cm²/(10 min), determined in accordance with ISO 1133 at 300°C and with 1.2 kg load.

4. Multilayer product according to any of the preceding claims, **characterized in that** mould-release agent and carbon black are introduced in the form of masterbatch of carbon black in the mould-release agent.

5. Multilayer product according to any of the preceding claims, **characterized in that** the mould-release agent is pentaerythritol tetrastearate.

6. Multilayer product according to any of the preceding claims, **characterized in that** the base layer comprises a heat stabilizer.

7. Multilayer product according to any of the preceding claims, **characterized in that** a scratch-resistant layer, and also optionally an adhesion-promoting layer, has been applied on both sides of the base layer.

8. Multilayer product according to any of the preceding claims, **characterized in that** the scratch-resistant layer is a polysiloxane lacquer.

9. Process for the production of a black multilayer product with deep gloss appearance according to Claim 1, comprising the following steps:
- preparation of a pigment-black-containing masterbatch with mould-release agent,
- production of a compounded material comprising polycarbonate and the pigment-black-containing masterbatch in the concentrations according to Claim 1,
- production of a moulding,
- coating of the moulding with a scratch-resistant layer in a single-stage coating process.

10. Process according to Claim 9, **characterized in that** a primer layer is applied before the moulding is coated with the scratch-resistant layer.

11. Process according to Claim 9 or 10, **characterized in that** the steps are implemented in the stated sequence.

12. Use of the multilayer products according to Claim 1 as exterior motor-vehicle part or interior motor-vehicle part or for frame parts for glazing systems made of glass or polycarbonate.

## Revendications

1. Corps multicouche noir à effet brillant profond ayant une transmission de la lumière inférieure à 0,1 %, déterminée conformément à la norme ISO 13468-2 à 780 nm sur une plaque de 2 mm d'épaisseur, comprenant :
1) contenant une couche de base produite par moulage par injection
• au moins un thermoplaste, dans lequel le thermoplaste est un polycarbonate ou un mélange de polycarbonate,
• du noir de carbone à échelle nanométrique en une quantité allant de 0,05 à 0,15 % en poids, dans lequel le noir de carbone est un noir de carbone colorant ayant une taille moyenne de particule primaire allant de 10 à 20 nm, déterminée par microscopie électronique à balayage,
• un agent de démoulage à base d'ester d'acide gras en une concentration allant de 0,1 à 0,5 % en poids,
dans lequel la couche de base produite par moulage par injection présente un taux de défauts de surface inférieur à 10 défauts de surface par cm², dans lequel la détection des imperfections de surface s'effectue par microscopie optique par observation en lumière réfléchie au moyen d'un filtre bleu dans le système de couleurs HLS sur une échelle de 0 à 255 pour les valeurs H, L et S, dans lequel les valeurs de seuil HLS pour la détection des défauts de surface sont fixées de manière à ce que leur couleur bleue soit détectée avec H = 127 pour les valeurs L supérieures à 157 et les valeurs S supérieures à 107, dans lequel les imperfections de surface > 10 µm d'aspect bleu sont évaluées comme étant des défauts de surface,
et dans lequel les quantités indiquées se réfèrent à la composition totale de la couche de base,
2) au moins sur une face de la couche de base, un revêtement résistant aux rayures à base de polysiloxane d'une épaisseur allant de 2 à 15 µm, contenant au moins un absorbeur d'UV.

2. Corps multicouche selon la revendication 1, **caractérisé en ce qu'**une couche d'amélioration de l'adhérence d'une épaisseur de 0,3 à 8 µm contenant au moins un absorbeur d'UV est en outre disposée sur la couche de base entre la couche de base et la couche résistant aux rayures.

3. Corps multicouche selon la revendication 1, **caractérisé en ce que** le polycarbonate ou le mélange de polycarbonate présente un indice de fluidité en volume de 7 cm³/(10 min) à 25 cm³/(10 min), déterminé selon ISO 1133 à 300°C et sous une charge de 1,2 kg.

4. Corps multicouche selon l'une quelconque des revendications précédentes, **caractérisé en ce que** le démoulant et le noir de carbone sont introduits en tant que mélange-maître de noir de carbone dans le démoulant.

5. Corps multicouche selon l'une quelconque des revendications précédentes, **caractérisé en ce que** l'agent de démoulage est le tétrastéarate de pentaérythrite.

6. Corps multicouche selon l'une quelconque des revendications précédentes, **caractérisé en ce que** la couche de base contient un thermostabilisant.

7. Corps multicouche selon l'une quelconque des revendications précédentes, **caractérisé en ce qu'**une couche résistant aux rayures et éventuellement une couche d'amélioration de l'adhérence sont appliquées sur les deux faces de la couche de base.

8. Corps multicouche selon l'une quelconque des revendications précédentes, **caractérisé en ce que** la couche résistant aux rayures est un vernis polysiloxane.

9. Procédé de production d'un corps multicouche noir à effet brillant profond selon la revendication 1, comprenant les étapes consistant à :
- produire un mélange-maître contenant du noir de carbone colorant avec un agent de démoulage,
- produire un composé contenant un polycarbonate et le mélange-maître contenant du noir de carbone colorant dans les concentrations selon la revendication 1,
- produire une pièce moulée,
- revêtir la pièce moulée d'une couche résistant aux rayures lors d'un processus de revêtement en une seule étape.

10. Procédé selon la revendication 9, **caractérisé en ce qu'**une couche d'apprêt est appliquée avant le revêtement de la pièce moulée avec la couche résistant aux rayures.

11. Procédé selon la revendication 9 ou 10, **caractérisé en ce que** les étapes sont exécutées dans l'ordre indiqué.

12. Utilisation du corps multicouche selon la revendication 1 en tant que partie extérieure de véhicule, que partie intérieure de véhicule et pour des vitrages en verre ou en polycarbonate.
